# EUROPEAN PATENT APPLICATION

(11) **EP 3 223 217 A1**
(43) Date of publication of application: **27.09.2017**
(21) Application number: 17165816.4
(22) Date of filing: 09.01.2015
(51) Int. Cl.: G06Q 10/10, H04L 12/18, H04L 29/06

(54) **ACCESSING AND CONFIGURING MEETING ATTRIBUTES**

(30) Priority: 16.01.2014 US 201414156811
(62) Divisional of application: 15703338.2
(71) Applicant: Microsoft Technology Licensing, LLC, Redmond, WA 98052-6399 (US)
(72) Inventor: STOTT, Nathaniel W., Redmond, WA 98052-6399 (US); SIMONDS, Andrew Richard, Redmond, WA 98052-6399 (US); STEVENSON, Daniel Cramer, Redmond, WA 98052-6399 (US); SHOROFF, Srikanth, Redmond, WA 98052-6399 (US); PARANDEKAR, Amey, Redmond, WA 98052-6399 (US); NASIR, Mohammad, Redmond, WA 98052-6399 (US); KRANTZ, Anton W., Redmond, WA 98052-6399 (US)
(74) Representative: Driver, Virginia Rozanne

(57) **Abstract**

A computer-implemented method, comprising maintaining the meeting object. The method also entails exposing an application programming interface (API) that enables interaction by the one or more external clients with the meeting object to perform at least one of reading attributes from the meeting object, writing attribute values to the meeting object, or accessing meeting content referenced by the meeting object.

## Description

### BACKGROUND

Modem communication systems have an array of capabilities, including integration of various communication modalities with different services. For example, voice/video communications, messaging, data/application sharing, white-boarding, and other forms of communication may be combined to provide diverse communication scenarios. Online meetings, for instance, enable rich collaborative experiences via integration of different communication modalities.

While current solutions for online meetings enable various types of collaboration, they also present a number of implementation challenges. For instance, a typical online meeting utilizes different services to handle different aspects of the meeting. A calendar service may handle scheduling and invitations, an online communication service may handle meeting connectivity among participants, a content service may host meeting content, and so forth. Thus, a typical online meeting involves a fragmented collection of services and content such that accurately characterizing and/or accessing different portions of the meeting may be difficult.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Techniques for accessing and configuring meeting attributes are described. In at least some embodiments, a meeting object is leveraged to store meeting attributes and pointers to meeting-related content. A meeting object, for instance, can serve as a manifest for meeting attributes.

According to various embodiments, different entities (e.g., applications, services, and so forth) can access a meeting object to ascertain and/or configure meeting attributes for a meeting. For instance, a meeting application programming interface (API) can be employed to enable different entities to interact with a meeting object in various ways.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items.
FIG. 1 is an illustration of an environment in an example implementation that is operable to employ techniques discussed herein.
FIG. 2 is an illustration of an environment in an example implementation that is operable to employ techniques discussed herein.
FIG. 3 illustrates an example portion of a meeting object in accordance with one or more embodiments.
FIG. 4 is a flow diagram that describes steps in a method for administering a meeting in accordance with one or more embodiments.
FIG. 5 is a flow diagram that describes steps in a method for propagating changes to a meeting in accordance with one or more embodiments.
FIG. 6 is a flow diagram that describes steps in a method for enabling interaction with a meeting object in accordance with one or more embodiments.
FIG. 7 illustrates an example system and computing device as described with reference to FIG. 1, which are configured to implement embodiments of techniques described herein.

### DETAILED DESCRIPTION

### Overview

Techniques for accessing and configuring meeting attributes are described. Generally, a "meeting" refers to a collaboration between different individuals and/or groups that can be realized in different ways. For instance, a meeting may include an in-person component where individuals meet at a particular physical location. Additionally or alternatively, a meeting may include a virtual component where individuals participate in a meeting via a virtual resource, such as on online meeting service, a web meeting application, and so forth. Thus, meetings enable individuals to communicate and collaborate via a variety of different communication modalities.

In at least some embodiments, a meeting object is leveraged to store meeting attributes and pointers to meeting-related content. Examples of meeting attributes include a list of meeting participants, meeting coordinates (e.g., meeting date/time, meeting location(s), and so forth), online meeting coordinates, meeting document collateral, meeting notes, meeting privacy definition, physical/virtual resources tied to the meeting, and so forth. Thus, a meeting object can serve as a manifest for meeting attributes.

According to various embodiments, different entities (e.g., applications, services, and so forth) can access a meeting object to ascertain and/or configure meeting attributes for a meeting. For instance, a meeting application programming interface (API) can be employed to enable different entities to interact with a meeting object in various ways.

Consider a scenario, for example, where a user leverages a calendar application to create a meeting instance. The calendar application can interact with a meeting service that manages meeting objects (e.g., via a meeting API) to create a meeting object for the meeting instance. The calendar application can set values for various meeting attributes in the meeting object, such as date/time for the meeting, a list of persons invited to attend the meeting, a meeting identifier that distinguishes the meeting from other meetings, and so forth.

Further to the example scenario, an online meeting resource can interact with the meeting object to specify online meeting coordinates for the meeting, such as a uniform resource locator (URL) for an online meeting space. A content resource can insert pointers into the meeting object that point to instances and/or collections of meeting-related content. A variety of other applications, services, and so forth, can each interact with the meeting object to create, configure, and/or reconfigure various meeting attributes. Thus, in at least some embodiments a meeting object represents an independent source of "truth" about a meeting that can be accessed and configured by various entities but that is not tied to or dependent on a particular entity. Various other details and implementations are discussed below.

In the following discussion, example environments are first described that is operable to employ techniques described herein. Next, a section entitled "Example Meeting Object" discusses an example code implementation of portions of a meeting object in accordance with one or more embodiments. Following this, a section entitled "Implementation Details" discusses some example implementation details for accessing and configuring meeting attributes in accordance with one or more embodiments. Next, a section entitled "Example Procedures" describes some example procedures in accordance with one or more embodiments. Finally, a section entitled "Example System and Device" describes an example system and device that are operable to employ techniques discussed herein in accordance with one or more embodiments.

Having presented an overview of example implementations in accordance with one or more embodiments, consider now some example environments in which example implementations may by employed.

### Example Environments

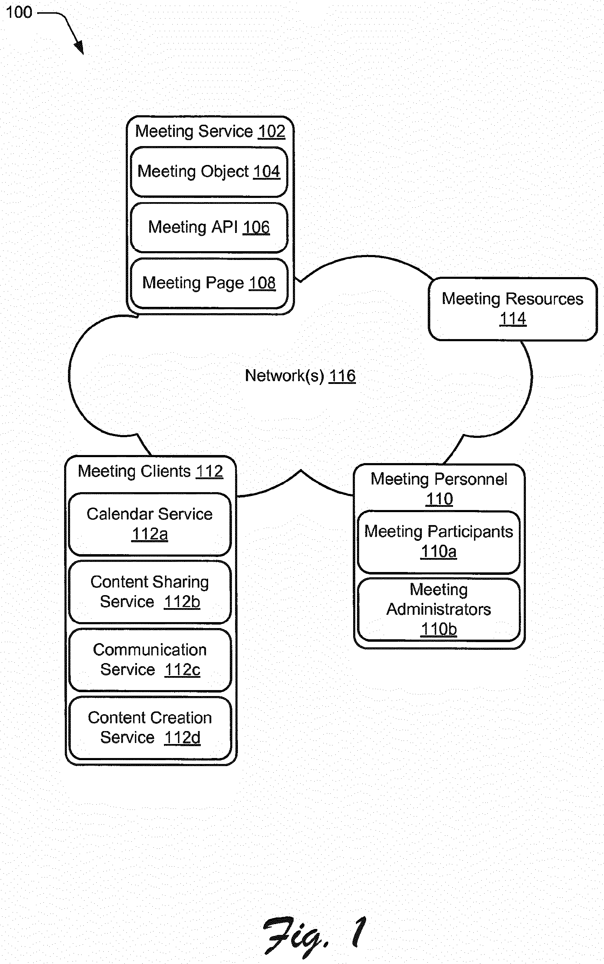

FIG. 1 is an illustration of an environment 100 in an example implementation that is operable to employ techniques for accessing and configuring meeting attributes described herein. Generally, the environment 100 includes various devices, services, and networks that enable meeting-related services and content to be administered and propagated via a variety of different modalities.

For instance, the environment 100 includes a meeting service 102, which is representative of functionality to perform various meeting-related tasks and to maintain different types of meeting information. The meeting service 102 may be implemented in a variety of different ways, such as via a server and/or combination of servers, a distributed network service, a cloud-based service, and so forth.

The meeting service 102 maintains meeting objects 104, which are representative of manifests for individual meetings that define and/or point to various meeting attributes. Example attributes maintained by the meeting objects 104 include but are not limited to meeting participants, meeting time, meeting location(s), calendar item identifier, online meeting coordinates, meeting document collateral, meeting notes, meeting privacy definition, booked room configuration information, physical/virtual resources tied to the meeting, and so forth. In at least some embodiments, individual meetings each have a particular meeting object 104 that is specific the meeting and that can be persisted for a specific period of time or indefinitely to serve as a representation of the meeting. In at least some embodiments, the meeting objects 104 may be implemented as separate data structures that may be configured, stored, and propagated in various ways. Further details and implementations of the meeting objects 104 are discussed below.

The meeting service 102 further includes a meeting application programming interface (API) 106 that is representative of functionality to access and interact with the meeting objects 104 and/or the meeting service 102. A meeting page 108 is also included, which enables various meeting information (e.g., from the meeting objects 104) to be accessed. For example, the meeting page 108 can enable read/write access to the meeting objects 104, such as for viewing meeting-related information, accessing meeting content, changing meeting attributes, and so forth. The meeting page 108, for instance, may be implemented as a web page accessible via a web browser, a web application, and so forth.

The environment 100 also includes meeting personnel 110, which are representative of individuals, groups, and so forth, that engage in various meeting-related activities. For instance, the meeting personnel 110 include meeting participants 110a and meeting administrators 110b. In at least some embodiments, the meeting participants 110a include individuals that attend and/or participate in a meeting. In at least some embodiments, the meeting participants 110a may be physically present at a particular location, such as a meeting room. Alternatively or additionally, the meeting participants 110s may be virtually present at a meeting, such as via a network connected device that is connected to other meeting participants. Thus, according to one or more embodiments a meeting may represent persons present at a particular location, devices connected to one another via network connectivity, and combinations thereof.

The meeting administrators 110b include individuals that manage different meeting-related tasks, such as inviting meeting participants 110a, reserving meeting resources, updating meeting information in the meeting object 104, and so forth. In at least some embodiments, a particular meeting personnel 110 may be either a meeting participant 110a, a meeting administrator 110b, or both.

The environment 100 further includes meeting clients 112, which are representative of different functionalities for managing and/or performing different meeting-related tasks. Examples of the meeting clients 112 include a calendar service 112a, a content sharing service 112b, a communication service 112c, a content creation service 112d, and so forth. The calendar service 112a is representative of functionality for performing scheduling tasks related to meetings, such as sending invitations to meeting invitees (e.g., the meeting participants 110a), maintaining acceptance statuses for invitees, changing and/or updating meeting times, and so forth. The content sharing service 112b is representative of functionality to enable various types of meeting content to be shared. For example, the content sharing service 112b can be implemented as a network-accessible storage location for meeting content, such as a cloud-based storage location.

The communication service 112c is representative of functionality for providing meeting connectivity to the meeting participants 110. Examples of the communication service 112c include an audio and/or video communication service (e.g., a Voice over Internet Protocol (VoIP) service), a web conferencing service, a Unified Communication and Collaboration (UC&C) service, and so forth.

The content creation service 112d is representative of functionality for generating various types of meeting content, such as text documents, multi-media presentations, graphics, audio, video, and so forth.

According to various embodiments, the meeting clients 112 represent functionality that is separate and distinct from the meeting service 102, such as applications and/or services that provide functionality independent of the meeting service 102. These examples of the meeting clients 112 are presented for purpose of example only, and it is to be appreciated that various other types, instances, and combinations of meeting clients may be employed in accordance with various embodiments.

As further detailed below, the meeting API 106 provides a portal to the meeting objects 104 for the meeting clients 112. For instance, the meeting clients 112 can write meeting data to and read meeting data from the meeting objects 104 via the meeting API 106. Thus, each of the meeting objects 104 represent a source of "truth" about a particular meeting, and can be accessed to discover meeting attributes as well as to configure and reconfigure meeting attributes. In at least some embodiments, meeting data specified by a particular meeting object 104 may override any inconsistent external meeting data, such as meeting data indicated by one or more of the meeting clients 112 that is inconsistent with the meeting object 104.

In at least some embodiments, the meeting API 106 is accessible by any particular application and/or service to interact with the meeting object 104. Thus, the meeting API 106 may be said to be client agnostic such that a variety of different functionalities may interact with the meeting object 104 via the meeting API 106.

The environment 100 further includes meeting resources 114, which are representative of various types of resources that can be leveraged to implement various portions of meetings. The meeting resources 114 may include physical resources, such as a building, a room, and so forth, where a meeting may occur. The meeting resources 114 may also include devices that are employed as part of a meeting, such as telephones, teleconferencing devices, audio devices, cameras, video/audio output devices, and so forth.

Still further, the meeting resources 114 may include virtual resources, such as network locations, websites, online services, and so forth. Thus, a particular meeting may leverage physical and/or virtual resources during its life cycle.

The various entities of the environment 100 are connected via a network 116, which is representative of functionality for providing connectivity between the various entities. Examples of the network 116 include a local area network (LAN), a wide area network (WAN), the Internet, and/or combinations thereof. Further details and implementations of the various entities of the environment 100 are discussed below.

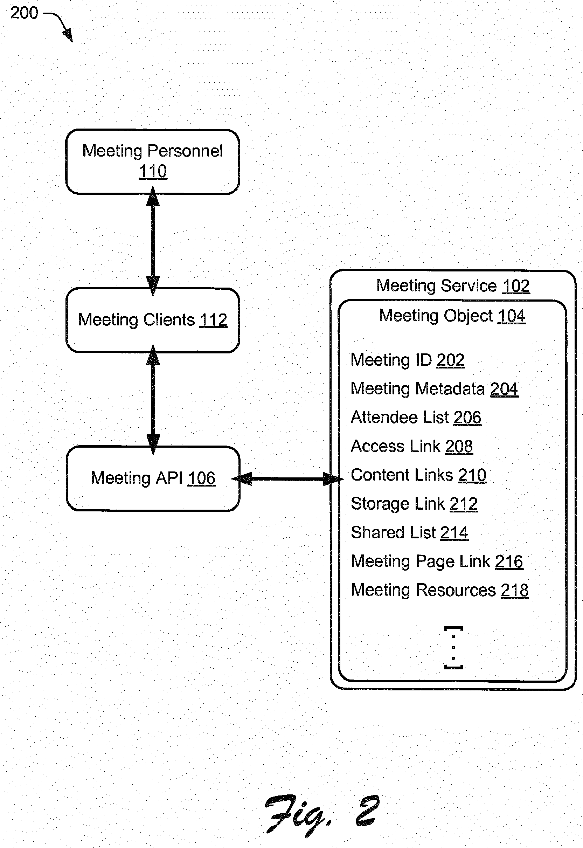

FIG. 2 illustrates an example environment 200 that is operable to enable interaction by various entities with a meeting object. The environment 200 includes the meeting object 104, which maintains various attributes for a particular meeting. Example meeting attributes stored in association with the meeting object 104 include:

Meeting Identifier (ID) 202, which represents an identifier attached to the meeting object 104 and that distinguishes the meeting object 104 from other meeting objects, as well as an associated meeting from other meetings. Thus the meeting ID 202 may be leveraged to access the meeting object 104 as well as an associated meeting.

Meeting Metadata 204, which represents metadata for a particular meeting. Examples of the meeting metadata 204 include meeting coordinates such as a meeting date, a meeting time, meeting location(s), and so forth. In at least some embodiments, Meeting Metadata 204 may include metadata for multiple related meetings, e.g., metadata that links and/or applies to multiple different instances of meetings that may be related in various ways.

Attendee List 206, which represents a list of individuals that are invited to attend a meeting. In at least some embodiments, the attendee list 206 can indicate acceptance status for invitees, such as invitees that have accepted a meeting invitation, invitees that have declined a meeting invitation, invitees whose acceptance statuses are pending, and so forth. The attendee list 206 may also indicate roles for attendees, such as "meeting participant," "meeting presenter," "meeting moderator," and so forth.

In at least some embodiments, the Attendee List 206 may include metadata about particular attendees listed in the Attendee List 206. Examples of such attendee metadata include attendee location (e.g., a current location of an attendee), attendee presence information (e.g., available, busy, out of office, and so forth), an estimated time of arrival of an attendee at a meeting location (e.g., based on what is known about a current location of the attendee and a rate of movement of the attendee), and so forth. Thus, various information about attendees may be gathered in various ways to track attendee status. Further, attendee metadata may be dynamically updated (e.g., in real time) to update information about attendees that can be accessed by other entities.

Access Link 208, which represents a link (e.g., a Uniform Resource Locator (URL)) that can be used to access a meeting. For instance, selection of an access link can connect a device to an online meeting site that is used to administer a meeting. The access link 208, for example, is selectable to provide real time access to a meeting while the meeting is in progress.

Content Links 210, which represent links (e.g., URLs) to meeting content. For instance, a particular content link 210 can be selected to retrieve an instance of meeting content from a particular storage location. In at least some embodiments, meeting content for a particular meeting instance can be stored across multiple different storage locations. Thus, the content links 210 enable meeting content to be retrieved by simply accessing the meeting object 104.

Storage Links 212, which represent links (e.g., URLs) to storage locations for meeting information and/or meeting content.

Shared List 214, which represents a list of individuals and/or other entities with which meeting information and/or meeting content may be shared. The shared list 214 typically includes the meeting personnel 110, but may also include other individuals not directly involved in a meeting. For instance, an individual that was not invited to a meeting may be added to the shared list 214 to enable the individual to access meeting information and/or meeting content, such as after the meeting has occurred.

In at least some embodiments, entities listed in the shared list 214 may be associated with different permissions. For instance, some entities may be designated as administrators that are permitted to configure specific meeting information, such as changing meeting time, date, and/or location, adding or deleting invitees, editing meeting content, and so forth. Other entities listed on the shared list 214 may be designated as "readers" that are permitted to access meeting information and/or content, but are not permitted to make meeting-related changes.

Meeting Page Link 216, which represents a link to a page (e.g., webpage) for a meeting, such as to the meeting page 108.

Meeting Resources 218, which identifies resources associated with a meeting. As referenced above, meeting resources can be physical resources, such as meeting rooms, devices, and so forth, that are leveraged as part of a meeting. Meeting resources may also be virtual resources, such as application instances, storage locations, network locations, and so forth. In at least some embodiments, a resource is identified via the meeting resources 218 to indicate that the resource has been reserved at a particular day and time for use during a meeting. The meeting resources 218 may also serve as a historical record of resources that were utilized during a meeting that has already occurred.

In at least some embodiments, the meeting object 104 does not store actual meeting content, but includes pointers to instances of meeting content and/or locations at which meeting content may be accessed. Examples of such pointers include the content links 210, the storage links 212, and so forth. This is not intended to be limiting, however, and in one or more alternative embodiments the meeting object 104 may include one or more instances of meeting-related content.

The meeting attributes discussed above are presented for purpose of example only, and it is to be appreciated that the meeting object 104 is extensible such that many different types of meeting attributes and attribute values can be defined via the meeting object 104.

Further to the environment 200, the meeting API 106 provides the meeting clients 112 with access to the meeting object 104 and its various attributes. For instance, the meeting personnel 110 can access and/or configure various attributes of the meeting object 104 via interaction with the meeting clients 112, which interact with the meeting object 104 via the meeting API 106.

According to one or more embodiments, each of the meeting clients 112 may access some or all meeting-related content referenced the meeting object 104. For instance, meeting data and content of the meeting object 104 can be queried and presented by each of the meeting clients 112. Thus, in at least some embodiments meeting data and content of the meeting object 104 is not application-specific, and may be accessed and consumed by a variety of different applications and services.

According to one or more embodiments, the meeting object 104 may be stored and/or managed at a single location, such as at the meeting service 102. Alternatively or additionally, the meeting object 104 may be distributed and/or replicated across multiple locations. For instance, different portions of the meeting object 104 may be stored and/or managed at different locations. In such embodiments, the meeting service 102 may serve as an object update service that propagates updates made to one instances of the meeting object 104 to other instances of the meeting object 104.

Having discussed some example environments in which embodiments may be employed, consider now a discussion of example meeting object code.

### Example Meeting Object

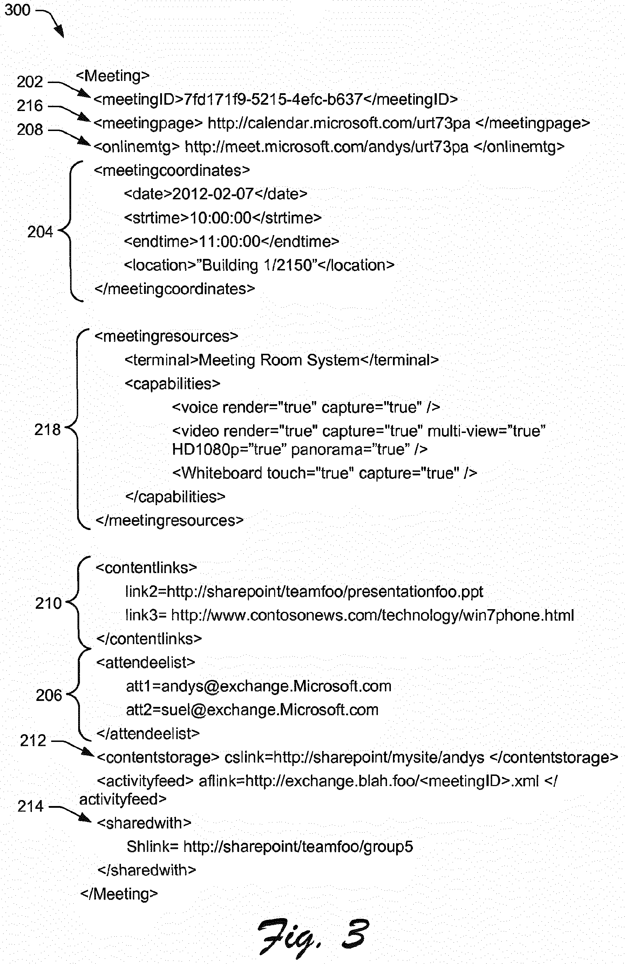

FIG. 3 illustrates an example object portion 300 of the meeting object 104. The object portion 300 is presented in Extensible Markup Language (XML) for purpose of example only, and it is to be appreciated that a meeting object may be implemented and/or defined in a variety of different ways and in a variety of different languages. Different sections of the object portion 300 are labeled with designators that correspond to object attributes described above.

While the example meeting objects discussed herein are associated with particular types of meeting-related data and content, it is to be appreciated that a meeting object is extensible such that different types of data and content may be associated with a meeting object. For instance, after a particular meeting object is generated and configured for a meeting, the meeting object may be updated to include data and/or content types not originally defined for the meeting object.

Having discussed an example code implementation of portions of a meeting object, consider now some implementation details in accordance with one or more embodiments.

### Implementation Details

The following section discusses some example implementation details for accessing and configuring meeting attributes in accordance with one or more embodiments.

In addition to the functionalities described above, the meeting service 102 may provide other meeting-related functionalities, such as:

(1) Object Security and Access Control - the meeting service 102 may implement various security protocols to ensure that access to the meeting object 104 is restricted to authorized and authenticated personnel. The meeting service 102, for instance, may include its own native authentication service, and/or may leverage an external (e.g., 3^{rd} party) authentication service for authenticating users for access to the meeting object 104.

(2) Role Management - the meeting service 102 may be leveraged to define roles for particular meeting personnel, such as for specifying read/write permissions for the meeting object 104 for specific users. The meeting service 102 may also enforce role-related policies, such as allowing specific types of interactions with the meeting object 104 based on a role for a particular meeting personnel. Thus, each role may be associated with a different set of policies that specify actions that personnel with that role may perform relative to the meeting object 104.

(3) Temporal Meeting Access - the meeting service 102 may broker access to meeting-related content, such as to attendees identified in the meeting object 104. Further, access to meeting content may be provided on a temporal basis, such as while a meeting is in progress and/or for a period of time before and/or after a meeting. For instance, the meeting service 102 may provide attendees and/or other personnel with a temporary access token that enables temporary access to meeting content. After the access token is expired (e.g., after a meeting is finished), requests for access that utilize the access token may be denied.

(4) Object Change Notification - the meeting service 102 may track changes to the meeting object 104, such as scheduling changes, invitee and/or attendee changes, changes to meeting content, permissioning changes, and so forth. Thus, the meeting clients 112 can access the meeting object 104 to determine changes that have been made to the object and to update their own meeting information based on the changes.

In at least some embodiments, the meeting service 102 can function as a notification service that pushes notifications informing the meeting clients 112 of changes to the meeting object 104. Alternatively or additionally, the meeting clients 112 can query the meeting service 102 for changes to the meeting object 104, such as changes that have occurred since a previous query. Thus, meeting records at the different meeting clients 112 for a particular meeting may be updated (e.g., occasionally and/or periodically) such that each meeting client 112 maintains accurate information about a meeting.

(5) Link Integrity - the meeting service 102 may function to ensure that meeting-related links are current. For instance, if links to meeting content and/or resources are changed, the meeting service 102 can update the meeting object 104 to include the correct links.

(6) Object Searching - the meeting service 102 may provide searching capabilities, such as for searching various attributes of the meeting object 104. For instance, the meeting service 102 may provide a search portal for performing search queries on the meeting object 104, and for providing results of such queries.

### Meeting Page

As referenced above, a meeting page (e.g., the meeting page 108) provides an interface into various meeting attributes and meeting content specified by the meeting object 104. A meeting page, for instance, can be implemented as a meeting-specific webpage that is accessible by a web browser and/or other web-enabled application or service. In at least some embodiments, an individual meeting has a link (e.g., a URL) that can be used to access a meeting page that is specific to the meeting.

Interaction with a meeting page can be controlled based on various considerations, such as roles associated with a user that is accessing the page. For instance, some roles may permit a user to change and/or configure meeting attributes, such as via writing and/or editing attributes of the meeting object 104. Other roles may not allow associated users to write to the meeting object 104, and may simply allow a user to view and/or consume meeting content. In at least some embodiments, a meeting page serves as an accessible manifestation of the meeting object 104.

### Meeting Security and Access

As referenced above, the meeting service 102 can implement various access policies that control how different users interact with a meeting object, such as based on roles for different users. In at least some embodiments, a meeting is considered by default to be "private" in that access to real-time components of a meeting (e.g., while the meeting is in progress) is restricted to invitees only. For instance, user's not expressly invited to a meeting will not be permitted to browse to and/or discover the meeting via a meeting search.

According to one or more embodiments, meetings can be shared with people, groups of people, and so forth. For instance, individuals and/or groups identified in the shared list 214 of the meeting object 104 may be permitted access to meeting information and/or content. Such shared entities may be users that are internal to a particular organization. Alternatively or additionally, shared entities may be external users outside a given organizational boundary, such as where meeting security and access policy supports meeting objects to be shared with external resources.

In at least some embodiments, shared access allows individuals to see metadata associated with the meeting (e.g., content, notes, attendees, and so forth), but doesn't permit direct entry into the real time meeting. Individuals with shared access to meeting content can request access to the real-time meeting, such as via a meeting lobby of the meeting page.

According to various embodiments, security and access for a meeting object can be controlled based on where the meeting object is stored and/or data with which the meeting object is associated. For instance, if a meeting object is stored at a particular location that has defined security and access policies, the meeting object can inherit those security and access policies.

Security and access policies for a meeting object may also be extensible and/or configurable in response to various events. For instance, a shared list for a meeting object may be changed over time (e.g., before, during, and/or after a meeting) to add and/or remove users, to change user roles, and so forth.

For example, consider a scenario where a meeting ends and a chat conversation concerning the meeting continues. Users may be added to the chat conversation by adding the users to a shared list for the meeting.

In another example, consider a scenario where a user leaves an organization and/or group associated with a meeting object. The user's organizational credentials, for example, may be revoked. In response to an indication that the user is no longer associated with the organization and/or group (e.g., based on credential revocation), the user may be automatically removed from a shared list and thus be unable to further access the meeting object.

Thus, in at least some embodiments, access to various meeting object data and/or content may be configured on a per-person and/or per-group basis. Thus, particular users and/or groups may be associated with customized permissions that permit access to some meeting object data and/or content, but not others.

### Meeting Content Storage

As referenced above, a meeting object is typically implemented as a lightweight representation of a meeting. For instance, a meeting object includes meeting metadata and a set of pointers to information and content, rather than content itself. In at least some embodiments, however, a meeting object may include one or more instances of content.

Increasingly meeting content may be stored via network resources, such as in the cloud. Such embodiments may reduce complications involved in uploading, storing, and permissioning access to meeting content over time. The following are some example scenarios for storage of meeting content:
**(1) Content already in the cloud -** This particular scenario pertains to meeting content that is stored in a cloud resource, such as at the time that a meeting occurs. Example considerations for cloud content include:
   (a) Limiting duplication of meeting content. According to various embodiments, a meeting object points to an original instance of content. Versioning controls for the original instance of content govern which version is accessible via the meeting object. For instance, in at least some embodiments the meeting object may not be leveraged to create a different version of meeting content that override native versioning controls for the content, e.g., versioning controls employed by a particular meeting client.
   (b) Access control for cloud content. According to various embodiments, access controls set up around cloud content govern access to the content. For instance, per-item permissioning changes to content for a meeting is not to be changed without permission from an authorized personnel. In at least some embodiments, however, temporary access to cloud-based meeting content may be granted outside of the meeting service permissioning policies.
**(2) Content created during a meeting or uploaded from a personal device.** In at least some embodiments, content that resides on a personal device and/or is created by a user during a meeting is to be made available to attendees and/or members of a shared list. Some example ways of managing such content include:
   (a) Temporarily store the content. The content can be stored in a temporary content repository, and can be aged out based on one or more aging policies.
   (b) Push the content to a connected space. In embodiments where a storage location is defined and/or connected to a meeting (e.g., a default location), content can be uploaded and stored at this location.
**(3) Meeting Snapshot.** Meetings may be recorded via capture of audio, video, and so forth, in a streaming/movie-style format for replay later. This replay scenario may be augmented via a snapshot of meeting content, such as content that is uploaded, linked from the cloud, and/or stored in a type of format that is linked to the meeting. Such a content snapshot would enable easy content sharing and/or content archival scenarios. In at least some embodiments, an audio/video capture of a meeting may be combined with a content snapshot to provide an integrated overview of the meeting as a whole.

### Meeting Resource Control

As referenced above, meeting resources can be identified and/or reserved via inclusion in a meeting object. Meeting resources may also be controlled via a meeting object. When a start time for a meeting arrives, for instance, meeting resources defined by a meeting object for the meeting can be automatically activated. For example, video devices, audio devices, and so forth, can be automatically powered-on. Alternatively or additionally, activation of meeting resources may occur at a preset time prior to the meeting time to provide the resources with a warm-up period.

In at least some embodiments, activation of meeting resources may occur in response to arrival of one or more meeting attendees. For instance, when an attendee for a meeting arrives at a meeting facility defined for the meeting, a functionality at the facility may identify the user and validate the user as a meeting attendee. Examples of such identification functionalities include biometric recognition functionality (e.g., facial recognition), radio frequency identification (RFID) functionality that recognizes a tag carried by the user, voice recognition functionality that recognizes the user's voice and/or voice commands, and so forth.

Thus, various resources and resource behaviors may be defined for a meeting utilizing a meeting object.

### Parallel Meeting Services

In at least some embodiments, parallel services may be linked to a meeting via a meeting object. For instance, consider that an audio recording of a meeting is captured and referenced via a meeting object. The meeting object can specify that when the meeting is over, the audio recording is to be transcribed into text and translated into one or more different languages. Thus, the meeting object can include pointers and/or links to parallel services that receive the audio recording, transcribe it into text, and translate the text into one or more other languages. The transcriptions and translations then become part of the meeting object, such as via links to storage locations at which respective documents are stored.

Thus, parallel services can provide ways of transforming meeting content and integrating transformed meeting content into a meeting object.

Having described some example implementation details, consider now a discussion of some example procedures in accordance with one or more embodiments.

### Example Procedures

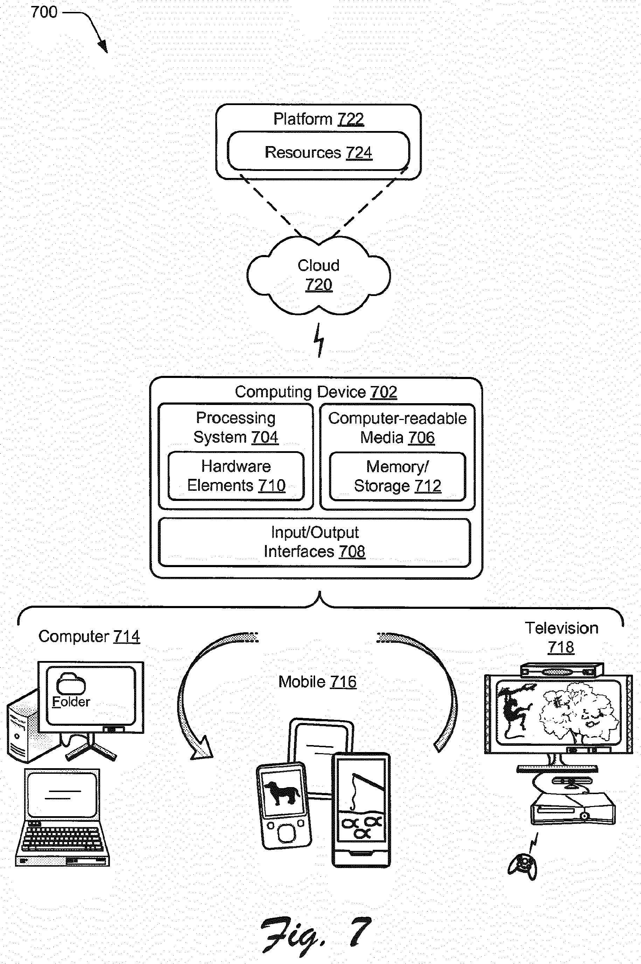

The following discussion describes some example procedures for accessing and configuring meeting attributes in accordance with one or more embodiments. The example procedures may be employed in the environments 100 of FIG. 1, 200 of FIG. 2, the system 700 of FIG. 7, and/or any other suitable environment. In at least some embodiments, the steps described for the various procedures can be implemented automatically and independent of user interaction. Alternatively or additionally, at least some of the steps may occur in response to user interaction. For instance, a meeting administrator 110b may interact with the meeting service 102 via one or more of the meeting clients 112 (e.g., through the meeting API 106) to perform various steps of the described procedures.

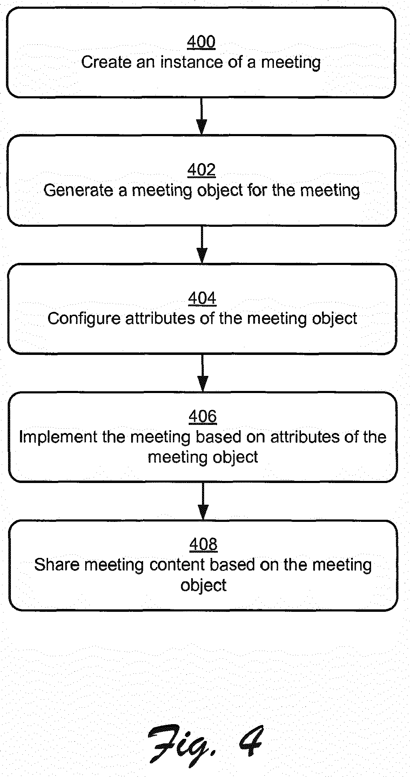

FIG. 4 is a flow diagram that describes steps in a method in accordance with one or more embodiments. The method describes an example procedure for administering a meeting in accordance with one or more embodiments.

Step 400 creates an instance of a meeting. For instance, a meeting administrator 110b can utilize a meeting client 112 to create an instance of a meeting.

Step 402 generates a meeting object for the meeting. A meeting object can be generated in various ways, such as via interaction with the meeting service 102. In at least some embodiments, creation of a meeting may instantiate (e.g., automatically) a meeting object for the meeting. In at least some embodiments, creation of a meeting object causes a meeting page to be automatically generated for the meeting object.

Step 404 configures attributes of the meeting object. For instance, various meeting attributes can be configured, such as day, time, invitees, meeting resources, and so forth. Examples of different meeting object attributes are detailed above.

In at least some embodiments, meeting attributes can be configured by a meeting client 112 and propagated from the meeting client 112 to the meeting object 104 via interaction with the meeting service 102. For instance, meeting attribute values of the meeting object 104 can be written and/or set via the meeting clients 112. Alternatively or additionally, meeting attributes can be configured via direct interaction with the meeting service 102, such as via the meeting page 108.

Step 406 implements the meeting based on attributes of the meeting object. For instance, meeting resources specified in the meeting object can be automatically reserved and/or activated via the meeting service 102, invitees identified in the meeting object can be invited, content identified in the meeting object can be retrieved (e.g., by one or more of the meeting clients 112), and so forth. Thus, attributes of the meeting object can function as triggers for various meeting-related events and processes.

Step 408 shares meeting content based on the meeting object. For instance, meeting invitees, attendees, persons on a shared list, and so forth, may be permitted to access meeting content identified and/or linked in the meeting object. The meeting object, for example, may be persisted for an extended period of time after a meeting is complete (e.g., days, months, years) and thus serve as a record of the meeting as well as content attached to the meeting. Users may access the meeting object subsequent to the meeting to experience meeting content, such as via playback of video/audio captured during the meeting, accessing meeting transcripts and/or translations, retrieving content referenced in the meeting object, and so forth.

In at least some embodiments, sharing meeting may include publishing meeting content to a particular location, such as a storage location, a meeting page for the meeting, and so forth. Thus, users with permission to access the particular location may consume meeting content published to the location.

While certain embodiments are discussed herein with reference to association of a single meeting with a meeting object, it is to be appreciated that an instance of a meeting object may represent multiple related meetings. For instance, a meeting object may be generated for a recurring meeting, such as a meeting that occurs periodically for a particular purpose. Thus, in at least some embodiments a single meeting object may include attributes for different meeting instances, such as invitees, meeting resources, meeting coordinates, and so forth, that are specific to each instance of the meeting.

Further to one or more embodiments, meeting objects may be interrelated. For instance, one meeting object may reference a different meeting object, such as via a link in the meeting object to the different meeting object that includes a meeting ID for the different meeting object. Linking different meeting objects may enable attribute inheritance among the linked meeting objects, such as inheritance of meeting invitees, meetings resources, meeting content, meeting permissions, and so forth.

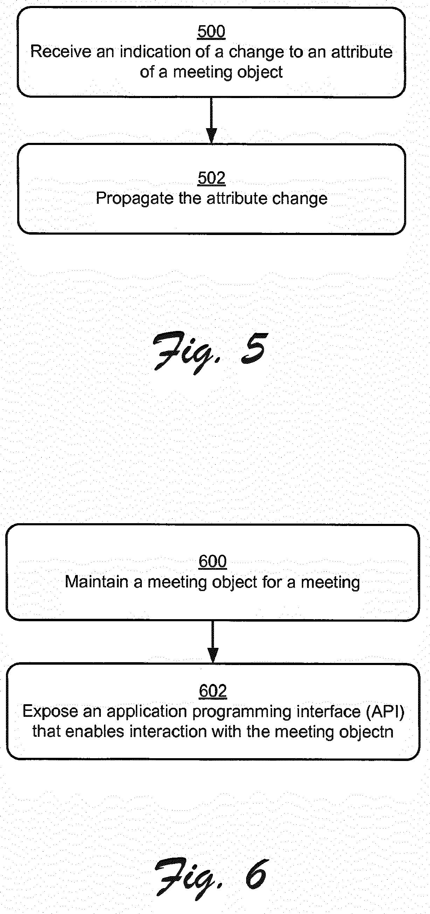

FIG. 5 is a flow diagram that describes steps in a method in accordance with one or more embodiments. The method describes an example procedure for propagating changes to a meeting in accordance with one or more embodiments.

Step 500 receives an indication of a change to an attribute of a meeting object. For instance, a meeting administrator 110b may reconfigure an existing attribute of a meeting object and/or add a new attribute to an existing meeting object.

Step 502 propagates the attribute change. As referenced above, for instance, the meeting service 102 can enable changes to attributes to be propagated to different entities in various ways. For instance, the meeting clients 112 can poll the meeting service 102 for changes to the meeting object 104, and can retrieve any changes that are discovered. Alternatively or additionally, the meeting service 102 can push changes to meeting object attributes out to the meeting clients 112 and/or other entities.

In at least some embodiments, an entity may register with the meeting service 102 to receive notifications of changes to the meeting object 104. Thus, the meeting service 102 may notify subscribing entities of changes to the meeting object 104. For instance, the meeting service 102 may notify a subscribing entity that a change to the meeting object 104 has occurred. The subscribing entity may then synchronize its own meeting attributes (e.g., its own "truth" about a particular meeting) with that of the meeting object. For instance, the subscribing entity may pull changes from the meeting object 104. Alternatively or additionally, the meeting service 102 may push actual changes to the meeting object 104 out to a subscribing entity.

FIG. 6 is a flow diagram that describes steps in a method in accordance with one or more embodiments. The method describes an example procedure for enabling interaction with a meeting object in accordance with one or more embodiments. The method, for instance, describes an example way of performing different steps of the procedures discussed above.

Step 600 maintains a meeting object for a meeting. The meeting service 102, for instance, maintains the meeting object 104 that represents a meeting and/or set of meetings.

Step 602 exposes an application programming interface (API) that enables interaction with the meeting object. For example, the meeting service 102 exposes the meeting API 106 such that different external entities (e.g., the meeting clients 112) may read from, write to, and/or interact in different ways with the meeting object 104.

Having discussed some example procedures, consider now a discussion of an example system and device in accordance with one or more embodiments.

### Example System and Device

FIG. 7 illustrates an example system generally at 700 that includes an example computing device 702 that is representative of one or more computing systems and/or devices that may implement various techniques described herein. For example, the meeting service 102 and/or entities discussed above with reference to FIG. 1 can be embodied as the computing device 702. The computing device 702 may be, for example, a server of a service provider, a device associated with the client (e.g., a client device), an on-chip system, and/or any other suitable computing device or computing system.

The example computing device 702 as illustrated includes a processing system 704, one or more computer-readable media 706, and one or more Input/Output (I/O) Interfaces 708 that are communicatively coupled, one to another. Although not shown, the computing device 702 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 704 is representative of functionality to perform one or more operations using hardware. Accordingly, the processing system 704 is illustrated as including hardware element 710 that may be configured as processors, functional blocks, and so forth. This may include implementation in hardware as an application specific integrated circuit or other logic device formed using one or more semiconductors. The hardware elements 710 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable media 706 is illustrated as including memory/storage 712. The memory/storage 712 represents memory/storage capacity associated with one or more computer-readable media. The memory/storage 712 may include volatile media (such as random access memory (RAM)) and/or nonvolatile media (such as read only memory (ROM), Flash memory, optical disks, magnetic disks, and so forth). The memory/storage 712 may include fixed media (e.g., RAM, ROM, a fixed hard drive, and so on) as well as removable media (e.g., Flash memory, a removable hard drive, an optical disc, and so forth). The computer-readable media 706 may be configured in a variety of other ways as further described below.

Input/output interface(s) 708 are representative of functionality to allow a user to enter commands and information to computing device 702, and also allow information to be presented to the user and/or other components or devices using various input/output devices. Examples of input devices include a keyboard, a cursor control device (e.g., a mouse), a microphone (e.g., for voice recognition and/or spoken input), a scanner, touch functionality (e.g., capacitive or other sensors that are configured to detect physical touch), a camera (e.g., which may employ visible or non-visible wavelengths such as infrared frequencies to detect movement that does not involve touch as gestures), and so forth. Examples of output devices include a display device (e.g., a monitor or projector), speakers, a printer, a network card, tactile-response device, and so forth. Thus, the computing device 702 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 702. By way of example, and not limitation, computer-readable media may include "computer-readable storage media" and "computer-readable signal media."

"Computer-readable storage media" may refer to media and/or devices that enable persistent storage of information in contrast to mere signal transmission, carrier waves, or signals per se. Computer-readable storage media do not include signals per se. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 702, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, radio frequency (RF), infrared, and other wireless media.

As previously described, hardware elements 710 and computer-readable media 706 are representative of instructions, modules, programmable device logic and/or fixed device logic implemented in a hardware form that may be employed in some embodiments to implement at least some aspects of the techniques described herein. Hardware elements may include components of an integrated circuit or on-chip system, an application-specific integrated circuit (ASIC), a field-programmable gate array (FPGA), a complex programmable logic device (CPLD), and other implementations in silicon or other hardware devices. In this context, a hardware element may operate as a processing device that performs program tasks defined by instructions, modules, and/or logic embodied by the hardware element as well as a hardware device utilized to store instructions for execution, e.g., the computer-readable storage media described previously.

Combinations of the foregoing may also be employed to implement various techniques and modules described herein. Accordingly, software, hardware, or program modules and other program modules may be implemented as one or more instructions and/or logic embodied on some form of computer-readable storage media and/or by one or more hardware elements 710. The computing device 702 may be configured to implement particular instructions and/or functions corresponding to the software and/or hardware modules. Accordingly, implementation of modules that are executable by the computing device 702 as software may be achieved at least partially in hardware, e.g., through use of computer-readable storage media and/or hardware elements 710 of the processing system. The instructions and/or functions may be executable/operable by one or more articles of manufacture (for example, one or more computing devices 702 and/or processing systems 704) to implement techniques, modules, and examples described herein.

As further illustrated in FIG. 7, the example system 700 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 700, multiple devices are interconnected through a central computing device. The central computing device may be local to the multiple devices or may be located remotely from the multiple devices. In one embodiment, the central computing device may be a cloud of one or more server computers that are connected to the multiple devices through a network, the Internet, or other data communication link.

In one embodiment, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In one embodiment, a class of target devices is created and experiences are tailored to the generic class of devices. A class of devices may be defined by physical features, types of usage, or other common characteristics of the devices.

In various implementations, the computing device 702 may assume a variety of different configurations, such as for computer 714, mobile 716, and television 718 uses. Each of these configurations includes devices that may have generally different constructs and capabilities, and thus the computing device 702 may be configured according to one or more of the different device classes. For instance, the computing device 702 may be implemented as the computer 714 class of a device that includes a personal computer, desktop computer, a multi-screen computer, laptop computer, netbook, and so on.

The computing device 702 may also be implemented as the mobile 716 class of device that includes mobile devices, such as a mobile phone, portable music player, portable gaming device, a tablet computer, a multi-screen computer, and so on. The computing device 702 may also be implemented as the television 718 class of device that includes devices having or connected to generally larger screens in casual viewing environments. These devices include televisions, set-top boxes, gaming consoles, and so on.

The techniques described herein may be supported by these various configurations of the computing device 702 and are not limited to the specific examples of the techniques described herein. For example, functionalities discussed with reference to the meeting service 102 and/or the meeting clients 112 may be implemented all or in part through use of a distributed system, such as over a "cloud" 720 via a platform 722 as described below.

The cloud 720 includes and/or is representative of a platform 722 for resources 724. The platform 722 abstracts underlying functionality of hardware (e.g., servers) and software resources of the cloud 720. The resources 724 may include applications and/or data that can be utilized while computer processing is executed on servers that are remote from the computing device 702. Resources 724 can also include services provided over the Internet and/or through a subscriber network, such as a cellular or Wi-Fi network.

The platform 722 may abstract resources and functions to connect the computing device 702 with other computing devices. The platform 722 may also serve to abstract scaling of resources to provide a corresponding level of scale to encountered demand for the resources 724 that are implemented via the platform 722. Accordingly, in an interconnected device embodiment, implementation of functionality described herein may be distributed throughout the system 700. For example, the functionality may be implemented in part on the computing device 702 as well as via the platform 722 that abstracts the functionality of the cloud 720.

Discussed herein are a number of methods that may be implemented to perform techniques discussed herein. Aspects of the methods may be implemented in hardware, firmware, or software, or a combination thereof. The methods are shown as a set of steps that specify operations performed by one or more devices and are not necessarily limited to the orders shown for performing the operations by the respective blocks. Further, an operation shown with respect to a particular method may be combined and/or interchanged with an operation of a different method in accordance with one or more implementations. Aspects of the methods can be implemented via interaction between various entities discussed above with reference to the environment 100.

### Conclusion

Techniques for accessing and configuring meeting attributes are described. Although embodiments are described in language specific to structural features and/or methodological acts, it is to be understood that the embodiments defined in the appended claims are not necessarily limited to the specific features or acts described. Rather, the specific features and acts are disclosed as example forms of implementing the claimed embodiments.

## Claims

1. A computer-implemented method, comprising:
maintaining the meeting object; and
exposing an application programming interface (API) that enables interaction by the one or more external clients with the meeting object to perform at least one of reading attributes from the meeting object, writing attribute values to the meeting object, or accessing meeting content referenced by the meeting object.

2. A method as claimed in claim 1, wherein said maintaining comprises maintaining the meeting object separately and independently from the one or more external clients.

3. A method as claimed in claim 1 or 2, wherein said maintaining comprises maintaining the meeting object without storing the meeting content as part of the meeting object.

4. A method as claimed in any preceding claim comprising configuring at least some of the attributes of the meeting object based on interaction with the meeting object by the one or more external clients; and
implementing one or more portions of the meeting at a computer system exposed to the API based on the attributes of the meeting object.

5. A method as claimed in any preceding claim, wherein the meeting attributes include at least some of an attendee list for the meeting, an access link for accessing the meeting, a content link for accessing meeting content, meeting resources for the meeting, or a shared list that identifies one or more entities that are permitted to access meeting data specified by the meeting object.

6. A method as claimed in claim 4, comprising sharing meeting content linked by the meeting object with one or more entities identified in a shared list of the meeting object.

7. A method as claimed in any preceding claim comprising receiving an indication of a change to an attribute of a meeting object; and propagating the attribute change to the one or more external clients.

8. A method as claimed in claim 4 or 6 comprising maintaining a meeting page for the meeting that enables access to the meeting object based and that presents one or more instances of meeting content linked by the meeting object.

9. A method as claimed in any preceding claim comprising controlling access by a user to the meeting object based on a role defined by the meeting object for the user.

10. A method as claimed in claim 7 comprising notifying the one or more external client that an attribute change has occurred.

11. A method as claimed in claim 7, wherein one or more of the external clients pull attribute changes from the meeting object.

12. A method as claimed in any preceding claim, wherein the meeting object is maintained by a meeting service that is independent of the external client.

13. A method as claimed in claim 7 and 12, wherein the meeting service pushes attribute changes to the one or more external clients.

14. A system comprising:
at least one processor; and
one or more computer-readable storage media including instructions stored thereon that, responsive to execution by the at least one processor, cause the system to perform the method of any preceding claim.:

15. A computer program comprising program code which when executed by a processor implements the steps of any of claims 1 to 13.
